# EUROPEAN PATENT APPLICATION

(11) **EP 2 011 391 A2**
(43) Date of publication of application: **07.01.2009**
(21) Application number: 08010136.3
(22) Date of filing: 04.06.2008
(51) Int. Cl.: A01K 5/02

(54) **Feed hopper system**

(30) Priority: 02.07.2007 TW 96210757 U
(71) Applicant: Suncue Company Ltd., Wu Feng Hsiang Taichung Hsien (TW)
(72) Inventor: Lin, Jung-Lang, Wu Feng Hsiang Taichung Hsien (TW)
(74) Representative: Schütte, Hartmut

(57) **Abstract**

A feed hopper system includes: a hopper (2) defining a chamber (21), the chamber having a lower portion (22); a stirring member (42); and a rotary feeding member (3) disposed below the stirring member (42), mounted rotatably in the lower portion (22) of the chamber (21) of the hopper (2), and including a rotor (30) that has first and second axial end portions (301, 302). The rotary feeding member (3) further includes a plurality of angularly spaced apart first blades (32) that radiate from the first axial end portion (301) of the rotor (30), and a plurality of angularly spaced apart second blades (33) that radiate from the second axial end portion (302) of the rotor (30). The first and second blades (32, 33) are alternately disposed.

## Description

### CROSS-REFERENCE TO RELATED APPLICATION

This application claims priority of Taiwanese application no. 096210757, filed on July 2, 2007.

This invention relates to a feed hopper system, more particularly to a feed hopper system including first and second blades alternately disposed on a rotor.

Conventional feed hopper systems for a furnace normally include a hopper defining a chamber adapted to receive a particulate material therein and having a lower portion, a stirring member extending through the lower portion of the chamber, and a rotary feeding member disposed below the stirring member, mounted rotatably in the lower portion of the chamber of the hopper, and including a rotor that is rotatable relative to the hopper. The rotary feeding member further includes a plurality of angularly spaced apart blades radiating from the rotor. A feed conveying tube is connected to a blower and a bottom of the hopper, and is in fluid communication with the lower portion of the chamber of the hopper.

In operation, the particulate material is stirred by the stirring member driven by a motor so as to be able to slide downwardly into gaps among the blades of the rotary feeding member which are disposed at an upper position, is subsequently carried by the corresponding blades to a lower position so as to be able to fall by virtue of gravity into the feed conveying tube, and is then carried away by an air flow generated by the blower to the furnace for combustion. Since the space between each two adj acent ones of the blades of the rotary feeding member is relatively large, an undesired discontinuity in feeding the particulate material into the feed conveying tube occurs, which can result in an adverse effect on the combustion efficiency.

Therefore, the object of the present invention is to provide a feed hopper system that can overcome the aforesaid drawback associated with the prior art.

According to the present invention, a feed hopper system comprises: a hopper defining a chamber adapted to receive a particulate material therein, the chamber having a lower portion; a stirring member extending through the lower portion of the chamber of the hopper for stirring the particulate material; and a rotary feeding member disposed below the stirring member, mounted rotatably in the lower portion of the chamber of the hopper, and including a rotor that is rotatable relative to the hopper and that has first and second axial end portions. The rotary feeding member further includes a plurality of angularly spaced apart first blades that radiate from the first axial end portion of the rotor, and a plurality of angularly spaced apart second blades that radiate from the second axial end portion of the rotor. The first and second blades are alternately disposed.

In drawings which illustrate an embodiment of the invention,
Fig. 1 is a fragmentary schematic view of the preferred embodiment of a feed hopper system according to this invention;
Fig. 2 is a fragmentary cutaway perspective view of the preferred embodiment; and
Fig. 3 is a fragmentary sectional view of the preferred embodiment.

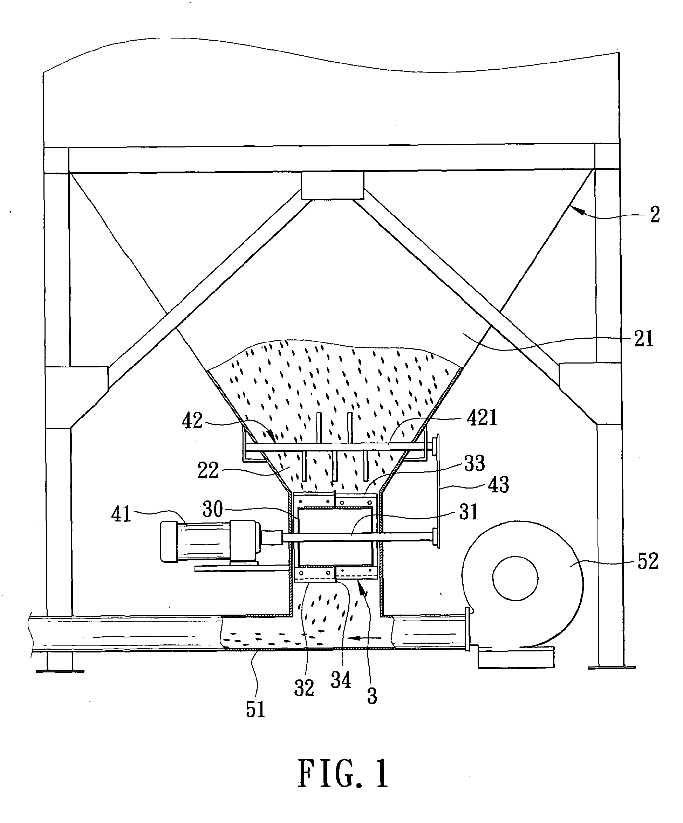

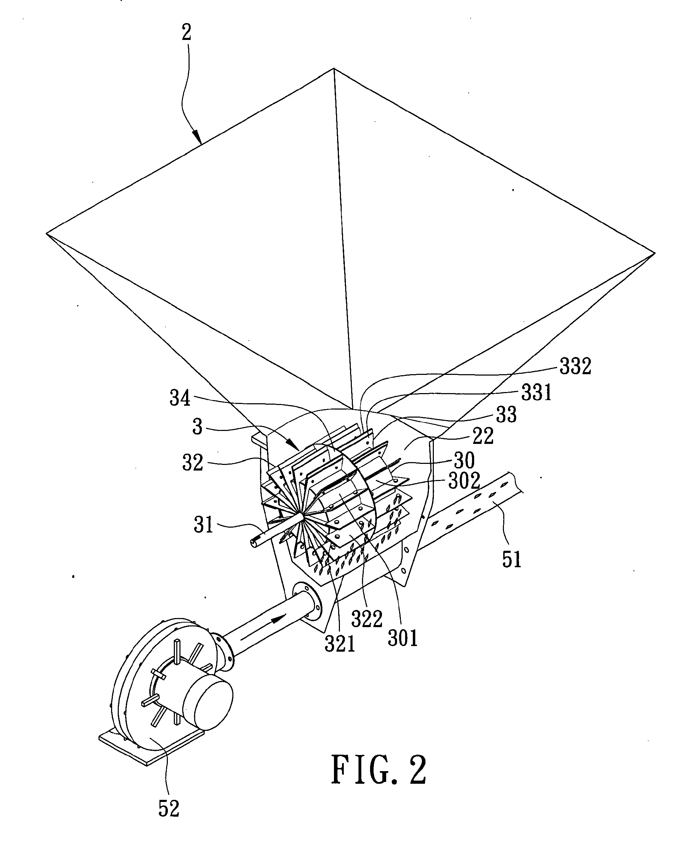

Figs. 1 and 2 illustrate the preferred embodiment of a feed hopper systemof this invention for receiving and feeding a particulate material to a furnace (not shown) for combustion.

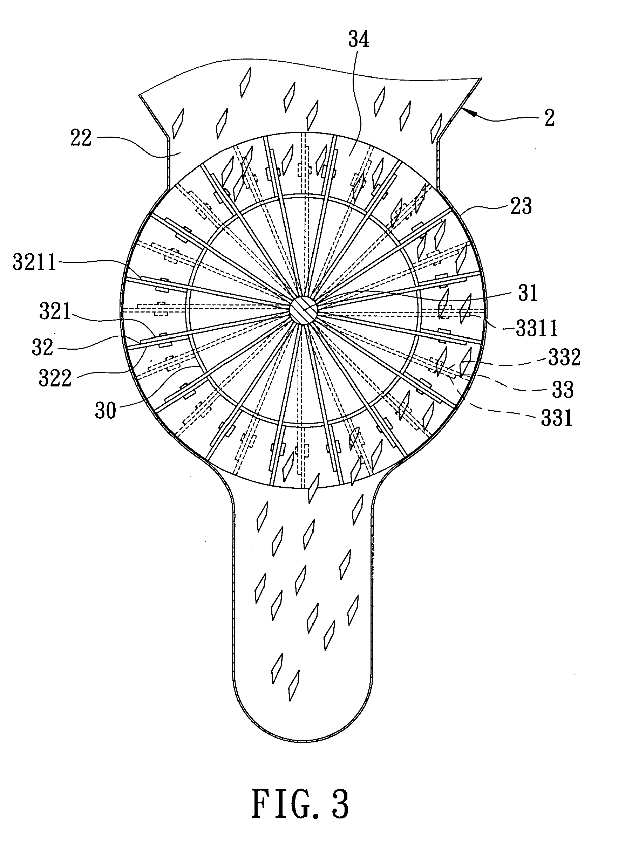

The feed hopper system includes: a hopper 2 defining a chamber 21 adapted to receive the particulate material therein, the chamber 21 having a lower portion 22; a stirring member 42 extending through the lower portion 22 of the chamber 21 of the hopper 2 for stirring the particulate material; and a rotary feeding member 3 disposed below the stirring member 42, mounted rotatably in the lower portion 22 of the chamber 21 of the hopper 2, and including a rotor 30 that is rotatable relative to the hopper 2 and that has first and second axial end portions 301, 302 . The rotary feeding member 3 further includes a plurality of angularly spaced apart first blades 32 that radiate from the first axial end portion 301 of the rotor 30, and a plurality of angularly spaced apart second blades 33 that radiate from the second axial end portion 302 of the rotor 30. The first and second blades 32,33 are alternately disposed (see Fig. 3).

The feed hopper system further includes a driving shaft 31 extending through the lower portion 22 of the chamber 21. The rotor 30 is sleeved securely on and is driven by the driving shaft 31.

The rotary feeding member 3 further includes a partitioning plate 34 that radiates from the rotor 30 and that separates the first blades 32 from the second blades 33. Each of the first and second blades 32,33 includes a rigid plate 321,331 that has a free end 3211,3311, and an elastic pad 322,332 attached to the free end 3211,3311 of the rigid plate 321,331. The lower portion 22 of the chamber 21 of the hopper 2 is defined by a lower wall portion 23 of the hopper 2. The elastic pad 322,332 of each of the first and second blades 32,33 is in sliding contact with the lower wall portion 23 of the hopper 2.

A motor 41 is connected to the driving shaft 31 for driving the stirring member 42 and the rotary feeding member 3. The driving shaft 31 is connected to a shaft 421 of the stirring member 42 through a transmission unit 43 so as to permit co-rotation of the stirring member 42 and the rotary feeding member 3. A feed conveying tube 51 is connected to the lower portion 22 of the chamber 21 of the hopper 2. A blower 52 is connected to the feed conveying tube 51.

When the motor 41 is actuated, the stirring member 42 and the rotary feeding member 3 are driven to rotate, and the particulate material is carried from the chamber 21 of the hopper 2 into the feed conveying tube 51, and is subsequently carried away by an air flow generated by the blower 52 to the furnace (not shown).

By virtue of the arrangement of the first and second blades 32,33 on the rotor 30, the aforesaid discontinuity problem in feeding the particulate material from the hopper 2 into the feed conveying tube 51 can be considerably alleviated.

## Claims

1. A feed hopper system **characterized by**:
a hopper (2) defining a chamber (21) adapted to receive a particulate material therein, said chamber (21) having a lower portion (22);
a stirring member (42) extending through said lower portion (22) of said chamber (21) of said hopper (2) for stirring the particulate material; and
a rotary feeding member (3) disposed below said stirring member (42), mounted rotatably in said lower portion (22) of said chamber (21) of said hopper (2), and including a rotor (30) that is rotatable relative to said hopper (2) and that has first and second axial end portions (301, 302), said rotary feeding member (3) further including a plurality of angularly spaced apart first blades (32) that radiate from said first axial end portion (301) of said rotor (30), and a plurality of angularly spaced apart second blades (33) that radiate from said second axial end portion (302) of said rotor (30), said first and second blades (32, 33) being alternately disposed.

2. The feed hopper system of Claim 1, further **characterized by** a driving shaft (31) extending through said lower portion (22) of said chamber (21), said rotor (30) being sleeved on and driven by said driving shaft (31).

3. The feed hopper system of Claim 1, **characterized in that** said rotary feeding member (3) further includes a partitioning plate (34) that radiates from said rotor (30) and that separates said first blades (32) from said second blades (33).

4. The feed hopper system of Claim 1, **characterized in that** each of said first and second blades (32, 33) includes a rigid plate (321, 331) that has a free end (3211, 3311), and an elastic pad (322, 332) attached to said free end (3211, 3311) of said rigid plate (321, 331).

5. The feed hopper system of Claim 4, **characterized in that** said lower portion (22) of said chamber (21) of said hopper (2) is defined by a lower wall portion (23) of said hopper (2), said elastic pad (322, 332) of each of said first and second blades (32, 33) being in sliding contact with said lower wall portion (23) of said hopper (2).

6. The feed hopper system of Claim 1, further **characterized by** a motor (41) for driving said stirring member (42) and said rotary feeding member (3).

7. The feed hopper system of Claim 1, further **characterized by** a feed conveying tube (51) connected to said lower portion (22) of said chamber (21) of said hopper (2), and a blower (52) connected to said feed conveying tube (51).
